# EUROPÄISCHE PATENTANMELDUNG

(11) **EP 2 312 274 A1**
(43) Veröffentlichungstag der Anmeldung: **20.04.2011**
(21) Anmeldenummer: 09012831.5
(22) Anmeldetag: 09.10.2009
(51) Int. Cl.: G01D 5/347, B62D 15/02

(54) **Positionsgeber mit Multiturn-Positionserfassung**

(71) Anmelder: Baumer Innotec AG, 8500 Frauenfeld (CH)
(72) Erfinder: Schneider, Michael, 78462 Konstanz (DE); Jahnke, Siegfried, 78652 Deisslingen (DE); Rapp, Günther, 78647 Trossingen (DE)
(74) Vertreter: Grünecker, Kinkeldey, Stockmair & Schwanhäusser Anwaltssozietät

(57) **Zusammenfassung**

Die vorliegende Erfindung betrifft einen Positionsgeber zur Erfassung der Position einer um eine Rotationsachse drehbaren Welle, umfassend eine optische Sensoranordnung mit mehreren Sensorelementen, in welcher die mehreren Sensorelemente zur Erfassung der Singleturn-Position der Welle vorgesehen sind, und wobei ein Teil der mehreren Sensorelemente zur Erfassung, insbesondere zur getriebelosen Erfassung, der Multiturn-Position der Welle vorgesehen ist.

## Beschreibung

### Gebiet der Erfindung

Die vorliegende Erfindung betrifft einen Positionsgeber zur Erfassung der Position einer um eine Rotationsachse drehbaren Welle.

### Stand der Technik

Positionsgebervorrichtungen finden allgemein zur Überwachung und Steuerung mechanischer Bewegungsabläufe Anwendung. Beispielsweise werden Positionsgeber für die Drehzahlerfassung und Steuerung von Motoren eingesetzt. Positionsgeber zur Bestimmung von Winkelpositionen durch berührungslose Single- oder Multiturn-Abtastung einer drehbaren Welle sind in verschiedenen Ausführungen bekannt.

Die Druckschrift EP 0550794 beschreibt einen Positionsgeber zur Absolutwertpositionserfassung einer drehbaren Welle, mit einer ersten Sensoranordnung und einer ersten Auswerteeinheit zur Erfassung und Auswertung der genauen Position der Welle während einer vollständigen Umdrehung, d.h. der Singleturn-Position, sowie mit einer zweiten Sensoranordnung und einer zweiten Auswerteeinheit zur Erfassung und Auswertung der Anzahl der vollständig durchlaufenen Umdrehungen der Welle, d.h. der Multiturn-Position. Zusätzlich ist eine dritte Auswerteeinheit vorgesehen zur Bildung eines Gesamtabsolutwerts aus dem Singleturn- und aus dem Multiturn-Positionswert und zur Ausgabe dieses Gesamtabsolutwerts an ein übergeordnetes System.

Die Erfassung der Singleturn-Position erfolgt dabei optisch, d.h. eine mit der Welle verbundene Maßverkörperung beeinflusst abhängig von deren Position die Signale einer Anordnung von Photodioden, die von einer LED beleuchtet werden. Die Erfassung der Multiturn-Position erfolgt dagegen magnetisch, d.h. eine mit der Welle verbundene Maßverkörperung beeinflusst abhängig von deren Position die Signale magnetischer Schaltelemente. Bei Abschalten oder Ausfall der externen Spannungsversorgung des Positionsgebers wird Erfassung der Singleturn-Position abgeschaltet. Die Versorgung der Multiturn-Erfassung wird weiter aufrecht erhalten, gespeist von einer Batterie im Positionsgeber. Zur Begrenzung des Energieverbrauchs sind die Schaltelemente in Reihe mit einem sehr hochohmigen Widerstand geschaltet, sind aber permanent bestromt. Das Ein- und Ausschalten der Schaltelemente erfolgt abhängig von der Position.

Die Druckschrift EP 1462771 beschreibt einen weiteren Positionsgeber. Die Erfassung der Singleturn-Position erfolgt magnetisch über einen zentral auf der Drehachse fixierten Permanentmagnet und eine drehfeste magnetische Sensoranordnung. Die Erfassung der Multiturn-Position erfolgt ebenfalls magnetisch. Zur Reduktion des Energieverbrauchs werden die Sensorteile durch die Auswerteeinheit nur periodisch für die Zeit der Messung mit Strom/Spannung beaufschlagt. Die Auswertung wird von einem Mikrocontroller übernommen. Dieser Mikrocontroller wird während der Pausen zwischen den Abtastungen in einem Stromspar-Mode mit verringerter Taktfrequenz und abgeschalteter Peripherie betrieben.

Durch das magnetische Prinzip der Multiturn-Erfassung der aus dem Stand der Technik bekannten Positionsgebervorrichtungen ergeben sich jedoch erhebliche Nachteile, wenn ein solcher Positionsgeber in der Nähe einer Magnetbremse eingesetzt wird und das Einkoppeln eines Magnetfelds in die Schaltelemente zu fehlerhaften Schaltimpulsen führt.

### Beschreibung der Erfindung

Der vorliegenden Erfindung liegt gegenüber dem Stand der Technik die Aufgabe zugrunde, einen gegen äussere Magnetfelder unempfindlichen Positionsgeber zu realisieren. In Weiterentwicklungen der Erfindung soll durch einen optimierten Aufbau und einen optimalen Betrieb der Sensoranordnungen sowie der Erfassungs- und Auswerteelektronik eine möglichst kompakte und kostengünstige Bauform sowie eine möglichst lange Lebensdauer erreicht werden.

Die oben genannte Aufgabe wird durch einen Positionsgeber gemäß Anspruch 1 gelöst.

Die beanspruchte Messvorrichtung betrifft einen Positionsgeber zur Erfassung der Position einer um eine Rotationsachse drehbaren Welle, umfassend eine optische Sensoranordnung mit mehreren Sensorelementen, in welcher die mehreren Sensorelemente zur Erfassung der Singleturn-Position der Welle vorgesehen sind, und wobei ein Teil der mehreren Sensorelemente zur Erfassung, insbesondere zur getriebelosen Erfassung, der Multiturn-Position der Welle vorgesehen ist.

Die optische Sensoranordnung mit den mehreren Sensorelementen umfasst dabei bevorzugt lichtempfindliche Elemente wie beispielsweise Fotodioden oder Fototransistoren. Die Erfassung der Multiturn-Position erfolgt somit ebenfalls optisch. Dies ermöglicht eine vollkommene Unempfindlichkeit der Positionserfassung gegen magnetische Felder. Für die Erfassung der Singleturn-Position werden sämtliche der mehreren Sensorelemente verwendet, während lediglich ein Teil der mehreren Sensorelemente auch für die Erfassung der Multiturn-Position verwendet wird.

In einer Weiterbildung des zuvor beschriebenen Positionsgebers können auch alle der mehreren Sensorelemente zur Erfassung, insbesondere zur getriebelosen Erfassung, der Multiturn-Position der Welle vorgesehen sein. Hierdurch lässt sich die Genauigkeit und Zuverlässigkeit der Messung erhöhen.

In einer anderen Weiterbildung kann ein weiterer Teil der mehreren Sensorelemente zur Erfassung mindestens einer weiteren Multiturn-Position der Welle vorgesehen sein, und es kann ein Abgleich der Multiturn-Position und der mindestens einen weiteren Multiturn-Position erfolgen. Dadurch kann ein Datenabgleich mit Diagnosemöglichkeit zur Verfügung gestellt werden.

In einer Weiterbildung kann der erfindungsgemäße Positionsgeber weiterhin eine Leuchteinrichtung umfassen, insbesondere eine Leuchtdiodenanordnung mit wenigstens einer Leuchtdiode, also mit genau einer Leuchtdiode oder mit mehreren Leuchtdioden. Die Leuchtdiodenanordnung kann dabei beispielweise genau eine Leuchtdiode aufweisen, deren Licht von allen Sensorelementen erfasst wird. In einer anderen Ausführung können jeweils eine Leuchtdiode oder mehrere Leuchtdioden für jeweilige Sensorelemente vorgesehen sein.

In einer anderen Weiterbildung kann der Positionsgeber weiterhin wenigstens eine, insbesondere genau eine, mit der Welle verbundene Maßverkörperung umfassen. Die mit der drehbaren Welle fest verbundene Maßverkörperung kann Mittel für die Singleturn-Erfassung als auch zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit des Positionsgebers erhöht.

In einer anderen Weiterbildung kann die wenigstens eine Maßverkörperung eine Ausgestaltung aufweisen, die den Lichtweg zu dem Teil der mehreren Sensorelemente entsprechend eines Teils einer ganzen Umdrehung unterbricht. Auf diese Weise ist eine Multiturn-Position beispielsweise in viertel, halben oder ganzen Umdrehungen erfassbar.

Eine andere Weiterbildung besteht darin, dass der Positionsgeber eine erste Auswerteeinheit zur Auswertung der Singleturn-Position, eine zweite Auswerteeinheit zur Auswertung der Multiturn-Position und eine Steuer-/Auswerteinheit zur Weiterverarbeitung der Singleturn-Position und der Multiturn-Position umfasst. Damit kann eine Vorverarbeitung der Signale von der optischen Sensoranordnung in der ersten bzw. zweiten Auswerteeinheit erfolgen, und die Berechnung eines Gesamtabsolutwerts kann dann in der Steuer-/Auswerteeinheit erfolgen.

In einer anderen Weiterbildung kann der Positionsgeber wenigstens zwei Betriebsmodi aufweisen, wobei die wenigstens zwei Betriebsmodi einen Normalmodus bei Anliegen einer externen Spannungsversorgung und einen Energiesparmodus bei Abschalten oder Ausfall der externen Spannungsversorgung umfassen. Zur Verringerung des Energieverbrauchs, ist es vorgesehen, dass die Betriebsart der Multiturn-Positionserfassung bei Abschalten oder Ausfall der externen Spannungsversorgung angepasst wird, d.h. dass beispielsweise nur Impulsmessungen (also im Vergleich zur Umlaufperiode kurzzeitige Messungen) vorgenommen werden. Zusätzlich kann vorgesehen sein, dass die Singleturn-Positionserfassung teilweise oder vollständig abgeschaltet wird.

Vorteilhafterweise kann der Positionsgeber so ausgebildet sein, dass im Energiesparmodus die erste Auswerteeinheit abgeschaltet ist.

In einer anderen Weiterbildung kann der Positionsgeber weiterhin eine Energiequelle, insbesondere in Form einer Batterie oder in Form eines Akkumulators, umfassen.

Hierdurch kann zum einen im Energiesparmodus die Sensoranordnung und/oder die Leuchteinrichtung zumindest zeitweise mit Spannung versorgt werden. Da z.B. die Fotodioden der optischen Sensoranordnung jedoch einen vernachlässigbaren Energieverbrauch besitzen, ist es vorzugsweise vorgesehen, diese permanent mit Strom/Spannung zu beaufschlagen.

Zum anderen kann, falls eine derartige Energiequelle vorgesehen ist, eine Einrichtung zur Überwachung der externen Spannungsversorgung und zum Umschalten der Energieversorgung des Positionsgebers bei Abschalten oder Ausfall der externen Energieversorgung auf die Energiequelle vorgesehen werden.

In einer anderen Weiterbildung kann der Positionsgeber so ausgebildet sein, dass im Energiesparmodus die Leuchteinrichtung zumindest zeitweise mit Spannung versorgbar ist, insbesondere, dass im Falle von mehreren Leuchtdioden im Energiesparmodus wenigstens ein Teil der mehreren Leuchtdioden zumindest zeitweise mit Spannung versorgbar ist

Zu einer effizienten Verringerung des Energieverbrauchs ist es zweckmäßig, den Betrieb des eigentlichen Aktors mit hohem Energieverbrauch, d.h. den Betrieb der Leuchteinrichtung (z.B. LED) in Abhängigkeit vom Betriebszustand mit einer variablen Einschaltdauer, wie beispielsweise periodisch oder gepulst mit einer variablen Frequenz, zu betreiben. Im Gegensatz zum Stand der Technik erfolgt hier also nicht ein periodischer Betrieb des Sensors, sondern des Aktors.

Eine andere Weiterbildung besteht demnach darin, dass die Leuchteinrichtung, insbesondere der Teil der mehreren Leuchtdioden zeitlich variabel, insbesondere periodisch oder gepulst mit einer variablen Frequenz, mit Spannung versorgbar sein können.

In einer anderen Weiterbildung kann der Positionsgeber weiterhin eine Bewegungsmesseinrichtung umfassen, mit der die Geschwindigkeit und/oder die Beschleunigung der Welle messbar ist, um in Abhängigkeit von der Messung die zeitlich variable Spannungsversorgung der Leuchteinrichtung, insbesondere Frequenz, und/oder Häufigkeit und/oder Dauer der Spannungsversorgung, vorzunehmen. Zusätzlich können mehrere Betriebsarten bzw. mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Eine andere Weiterbildung besteht darin, dass die Steuer- und Auswerteinheit dazu ausgebildet sein kann, die zeitlich variable Spannungsversorgung der Leuchteinrichtung vorzunehmen.

In einer anderen Weiterbildung kann die optische Sensoranordnung auf einem Sensorbauteil, insbesondere einem ASIC integriert sein.

Eine andere Weiterbildung besteht darin, dass die Steuer- und Auswerteinheit ebenfalls in dem ASIC integriert sein können. Auf diese Weise kann die Anzahl der Bauteile des Positionsgebers reduziert und die Lebensdauer wesentlich erhöht werden. Gleichzeitig verringert sich der Platzbedarf der Sensoren und der Elektronik.

Weitere Merkmale und Vorteile der vorliegenden Erfindung werden im Weiteren mit Bezug auf die Figuren beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

### Kurzbeschreibung der Zeichnungen

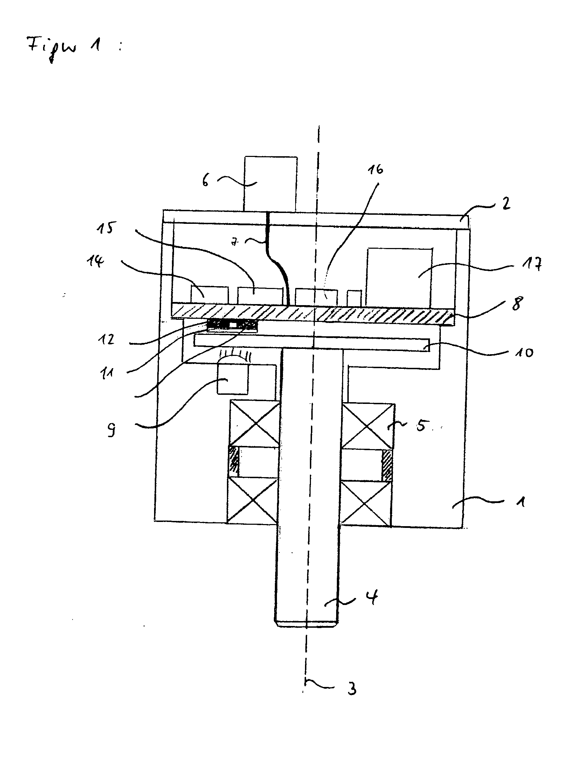

Figur 1 illustriert Komponenten eines Beispiels einer erfindungsgemäßen Positionsgebervorrichtung.

### Beschreibung der Ausführungsformen

Zur Erfassung der Singleturn-Position wird eine optische Abtastung verwendet. Die Erfassung der Multiturn-Position erfolgt ebenfalls optisch. Dies ist neu gegenüber dem in den Druckschriften EP 0550794 und EP 1462771 beschriebenen Stand der Technik, und dies ermöglicht eine vollkommene Unempfindlichkeit der Positionsmessung gegen magnetische Felder.

Da nun sowohl die Singleturn- als auch die Multiturn-Positionserfassung mit optischen Sensoranordnungen realisiert wird, ergibt sich weiterhin die Möglichkeit, dass beide Sensoranordnungen auf demselben Sensorbaustein angeordnet integriert werden können. Zusätzlich können auf diesen Sensorbaustein auch noch weitere Vorrichtungen, wie beispielsweise Auswerteeinheiten, Schnittstellen, Ausgangstreiber sowie Einheiten für den Betrieb, Ansteuerung und Diagnose der LED integriert werden. Auf diese Weise kann die Anzahl der Bauteile des Positionsgebers massiv reduziert und die Lebensdauer bzw. die MTTF Zeit (mittlere Betriebsdauer bis zum Ausfall, engl. Mean Time To Failure) wesentliche erhöht werden. Gleichzeitig verringert sich der Platzbedarf der Sensoren und der Elektronik.

Die mit der drehbaren Welle fest verbundene Maßverkörperung für die Singleturn-Erfassung kann nun zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit erhöht.

Zur Verringerung des Energieverbrauchs, ist es vorgesehen, dass die Multiturn-Positionserfassung bei Abschalten oder Ausfall der externen Spannungsversorgung nur Impulsmessungen vornimmt. Da die Fotodioden der optischen Sensoranordnung, also die Sensoren im Sinne von EP 1462771, jedoch einen vernachlässigbaren Energieverbrauch besitzen, ist es bevorzugt vorgesehen, diese permanent mit Strom/Spannung zu beaufschlagen. Zu einer effizienten Verringerung des Energieverbrauchs ist es vielmehr zweckmässig, den Betrieb des eigentlichen Aktors mit hohem Energieverbrauch, d.h. den Betrieb der LED in Abhängigkeit vom Betriebszustand mit einer variablen Einschaltdauer, wie beispielsweise periodisch oder gepulst mit einer variablen Frequenz, zu betreiben. Im Gegensatz zu EP 1462771 erfolgt hier also nicht ein periodischer Betrieb des Sensors, sondern des Aktors.

Ist die komplette Auswertung in einer anwendungsspezifischen integrierten Schaltung (engl. application specific integrated circuit, ASIC) vorgesehen, kann auch die Umdrehungserfassung auf die Zeit ohne externe Spannungsversorgung begrenzt werden, und sie wird in der Zeit mit externer Spannungsversorgung von der Positionserfassung innerhalb einer Umdrehung mit übernommen.

Die Energiequelle für den Betrieb des Umdrehungszählers bei Abschalten oder Ausfall der externen Spannungsversorgung kann beispielsweise eine interne oder externe Batterie bzw. ein externer oder interner Akkumulator sein.

In Figur 1 ist eine erfindungsgemäße Positionsgebervorrichtung gemäß einem Beispiel der vorliegenden Erfindung veranschaulicht.

Die Erfassung der Singleturn-Position innerhalb einer Umdrehung wird darin mit einer Sensoranordnung 12 mit lichtempfindlichen Elementen realisiert, beispielsweise mit Fotodioden oder Fototransistoren, die durch eine optische Maßverkörperung 10 von einer Leuchtdiodenanordnung 9 beleuchtet werden können. Ein Teil der Fotodioden oder Fototransistoren wird zusätzlich auch für die Erfassung der Multiturn-Position verwendet.

Beispielhaft ist in dieser Ausführungsform eine erste Auswerteinheit 14 zur Auswertung der Singleturn-Position, eine zweite Auswerteinheit 15 zur Auswertung der Multiturn-Position (Vorverarbeitung der Messsignale) und eine Steuer- und Auswerteinheit 16 z.B. zur Bestimmung eines Gesamtabsolutwerts der Wellenposition (Weiterverarbeitung der Signale von der ersten und der zweiten Auswerteinheit 14, 15) vorgesehen.

Die Leuchtdiodenanordnung 9 wird von der Steuer- und Auswerteinheit 16, beispielsweise einem Mikrokontroller, über Konstantstromquellen je nach Betriebssituation des Positionsgebers nach Bedarf, angesteuert. Auch die Auswertung und Weiterverarbeitung der Singleturn-Position wird von der von der Steuer- und Auswerteinheit 16 je nach Betriebsituation des Positionsgebers nach Bedarf, angesteuert.

Die Auswertung und Weiterverarbeitung der Singleturn-Position wird von der Steuer- und Auswerteinheit 16 ebenfalls je nach Betriebsituation des Positionsgebers nach Bedarf vorgenommen. Bei Anliegen der externen Spannungsversorgung, d.h. im Normalbetrieb kann die Singleturn-Position als auch die Multiturn-Position erfasst werden.

Die Erfassung der Multiturn-Position und/oder der Drehrichtung, d.h. die Erfassung eines Teils einer Umdrehung (beispielsweise viertel, halben oder ganzen Umdrehungen) kann über eine besondere Ausgestaltung der Maßverkörperung 10 erreicht werden, die den Lichtweg zwischen Dioden und Fotoempfänger entsprechend unterbricht. Hierbei kann die Maßverkörperung 10 verwendet werden, die auch für die Erfassung der Singleturn-Position verwendet wird.

Bei Anliegen der externen Spannungsversorgung, d.h. im Normalbetrieb, kann die Leuchtdiodenanordnung 9, beispielsweise permanent bestromt werden. Sie kann aber auch mit einer variablen Einschaltdauer, wie beispielsweise periodisch oder gepulst mit einer variablen Frequenz, betrieben werden. Sie kann insbesondere zeitweise auch unbestromt sein.

Bei Abschalten oder Ausfall der externen Spannungsversorgung d.h. im Energiesparbetrieb, kann die Leuchtdiodenanordnung 9 mit einer variablen Einschaltdauer, wie beispielsweise periodisch oder gepulst mit einer variablen Frequenz, betrieben werden, die reduziert ist gegenüber dem Normalbetrieb. Häufigkeit und Dauer der Bestromung kann mit der ersten erkannten Signaländerung erhöht werden.

Eine besonders vorteilhafte Ausführung ist es, wenn die für die Erfassung der Umdrehungen notwendigen Strukturen mit auf der Maßverkörperung 10 angeordnet sind und so auf eine zusätzliche Maßverkörperung oder eine Unterbrecherscheibe (siehe Figur 2) verzichtet werden kann.

Bei Abschalten oder Ausfall der externen Spannungsversorgung wird die Umdrehungszählung mit einer Energiequelle versorgt. Diese Energiequelle 17 kann eine Batterie oder ein Akkumulator sein. Die Energiequelle 17 kann in den Positionsgeber integriert oder außerhalb des Gehäuses des Positionsgebers angeordnet sein.

Die Ansteuerung der LED, beispielsweise Frequenz, Häufigkeit oder Dauer des Einschaltens, kann abhängen von Betriebsparametern des Positionsgebers, beispielsweise von der Geschwindigkeit und/oder der Beschleunigung der Bewegung der Welle. Dazu kann eine Vorrichtung vorhanden sein, die es erlaubt, auch im Energiesparmodus die Geschwindigkeit und/oder die Beschleunigung zu ermitteln. Zusätzlich können mehrere Betriebsarten beispielsweise mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Eine zusätzliche, optimierte Erweiterung des Systems kann durch eine Integration der Fotoempfänger in einen Opto-ASIC erfolgen. Durch die höhere, erzielbare Verarbeitungsgeschwindigkeit im Opto-ASIC kann der Stromverbrauch im Batteriebetrieb noch weiter reduziert und die zulässige Grenzfrequenz des Abtastsystems erhöht werden.

## Patentansprüche

1. Positionsgeber zur Erfassung der Position einer um eine Rotationsachse (3) drehbaren Welle (4), umfassend
eine optische Sensoranordnung (12) mit mehreren Sensorelementen, in welcher die mehreren Sensorelemente zur Erfassung der Singleturn-Position der Welle vorgesehen sind, und
wobei ein Teil der mehreren Sensorelemente zur Erfassung, insbesondere zur getriebelosen Erfassung, der Multiturn-Position der Welle vorgesehen ist.

2. Positionsgeber gemäß Anspruch 1, worin alle der mehreren Sensorelemente zur Erfassung der Multiturn-Position vorgesehen sind oder worin ein weiterer Teil der mehreren Sensorelemente zur Erfassung mindestens einer weiteren Multiturn-Position der Welle vorgesehen ist und ein Abgleich der Multiturn-Position und der mindestens einen weiteren Multiturn-Position erfolgt.

3. Positionsgeber gemäß Anspruch 1 oder 2, der weiterhin eine Leuchteinrichtung (9), insbesondere eine Leuchtdiodenanordnung (9) mit einer Leuchtdiode oder mit mehreren Leuchtdioden, umfasst.

4. Positionsgeber gemäß einem der Ansprüche 1 bis 3, der weiterhin wenigstens eine, insbesondere genau eine, mit der Welle verbundene Maßverkörperung (10) umfasst.

5. Positionsgeber gemäß Anspruch 4, worin die wenigstens eine Maßverkörperung eine Ausgestaltung aufweist, die den Lichtweg zu dem Teil der mehreren Sensorelemente entsprechend eines Teils einer ganzen Umdrehung unterbricht.

6. Positionsgeber gemäß einem der Ansprüche 1 bis 5, der eine erste Auswerteeinheit (14) zur Auswertung der Singleturn-Position, eine zweite Auswerteeinheit (15) zur Auswertung der Multiturn-Position und eine Steuer- und Auswerteinheit (16), insbesondere einen Mikrocontroller, zur Weiterverarbeitung der Singleturn-Position und der Multiturn-Position umfasst.

7. Positionsgeber gemäß einem der Ansprüche 1 bis 6, der wenigstens zwei Betriebsmodi aufweist, wobei die wenigstens zwei Betriebsmodi einen Normalmodus bei Anliegen einer externen Spannungsversorgung und einen Energiesparmodus bei Abschalten oder Ausfall der externen Spannungsversorgung umfassen.

8. Positionsgeber gemäß Anspruch 7, in welchem der Positionsgeber so ausgebildet ist, dass im Energiesparmodus die erste Auswerteeinheit abgeschaltet ist.

9. Positionsgeber gemäß Anspruch 7 oder 8, in welchem weiterhin eine Energiequelle (17), insbesondere in Form einer Batterie oder in Form eines Akkumulators, und eine Einrichtung zur Überwachung der externen Spannungsversorgung und zum Umschalten der Energieversorgung des Positionsgebers bei Abschalten oder Ausfall der externen Energieversorgung auf die Energiequelle (17) vorgesehen ist.

10. Positionsgeber gemäß Anspruch 9 in Kombination mit Anspruch 3, der so ausgebildet ist, dass im Energiesparmodus die Leuchteinrichtung zumindest zeitweise mit Spannung versorgbar ist, insbesondere, dass im Falle von mehreren Leuchtdioden im Energiesparmodus wenigstens ein Teil der mehreren Leuchtdioden zumindest zeitweise mit Spannung versorgbar ist.

11. Positionsgeber gemäß Anspruch 10, wobei die Leuchteinrichtung, insbesondere der Teil der mehreren Leuchtdioden, zeitlich variabel, insbesondere periodisch oder gepulst mit einer variablen Frequenz, mit Spannung versorgbar ist.

12. Positionsgeber gemäß Anspruch 10 oder 11, der weiterhin eine Bewegungsmesseinrichtung umfasst, mit der die Geschwindigkeit und/oder die Beschleunigung der Welle messbar ist, um in Abhängigkeit von der Messung die zeitlich variable Spannungsversorgung der Leuchteinrichtung, insbesondere Frequenz, und/oder Häufigkeit und/oder Dauer der Spannungsversorgung, vorzunehmen.

13. Positionsgeber gemäß einem der Ansprüche 10 bis 12 in Kombination mit Anspruch 6, worin die Steuer- und Auswerteinheit dazu ausgebildet ist, die zeitlich variable Spannungsversorgung der Leuchteinrichtung, insbesondere des Teils der mehreren Leuchtdioden, vorzunehmen.

14. Positionsgeber gemäß einem der vorangehenden Ansprüche, worin die optische Sensoranordnung auf einem Sensorbauteil, insbesondere einem ASIC integriert ist.

15. Positionsgeber gemäß Anspruch 14 in Kombination mit Anspruch 6, worin die Steuer- und Auswerteinheit ebenfalls in dem ASIC integriert ist.
